Europäisches Patentamt

European Patent Office

Office européen des brevets

(19)

(11) Numéro de publication: **0 235 003**
**B1**

(12) **FASCICULE DE BREVET EUROPEEN**

(45) Date de publication du fascicule du brevet: 23.05.90

(21) Numéro de dépôt: 87400211.6

(22) Date de dépôt: 30.01.87

(51) Int. Cl.⁵: **C 10 G 49/22, C 10 G 49/12, C 10 G 31/09, C 10 G 67/02**

(54) **Procédé d'hydrotraitement d'hydrocarbures lourds en phase liquide en présence d'un catalyseur dispersé.**

(30) Priorité: 10.02.86 FR 8601879

(43) Date de publication de la demande:
02.09.87 Bulletin 87/36

(45) Mention de la délivrance du brevet:
23.05.90 Bulletin 90/21

(84) Etats contractants désignés:
BE DE ES GB IT NL

(56) Documents cités:
EP-A-0 041 013
EP-A-0 052 719
EP-A-0 073 690
FR-A-2 456 774
FR-A-2 550 953
US-A-4 060 488

(73) Titulaire: INSTITUT FRANCAIS DU PETROLE
4, Avenue de Bois-Préau
F-92502 Rueil-Malmaison (FR)

(73) Titulaire: COMMISSARIAT A L'ENERGIE ATOMIQUE
31/33, rue de la Fédération
F-75015 Paris (FR)

(72) Inventeur: Giuliani, Pierre
20, Boulevard du Maréchal Joffre
F-38000 Grenoble (FR)
Inventeur: Franckowiak, Sigismond
5, rue de l'Est
F-92500 Rueil Malmaison (FR)
Inventeur: Roche, Gilbert
La Barrière 11 bis, av. du Maréchal Juin
F-07700 Bourg Saint Audeol (FR)
Inventeur: Bergez, Pierre
32, rue Dareau
F-75014 Paris (FR)

(74) Mandataire: Colas des Francs, Jean
Institut Français du Pétrole 4, Avenue de Bois Préau
F-92502 Rueil-Malmaison (FR)

Courier Press, Leamington Spa, England.

# EP 0 235 003 B1

## Description

La présente invention concerne le domaine de raffinage du pétrole et plus concrètement les procédés de conversion par hydrogénation des huiles de pétrole brutes, des fractions d'hydrocarbures lourds, ainsi que des résidus pétroliers.

La charge utilisée dans le procédé de la présente invention peut être une huile hydrocarbonée quelconque à point d'ébullition élevé, par exemple supérieur à 350°C. La source initiale de l'huile peut être quelconque et par exemple le pétrole brut, des matières telles que l'huile de schiste ou de sables huileux, ou des hydrocarbures liquides résultant de la liquéfaction des charbons. La charge renferme habituellement au moins 1% d'asphaltènes, déterminés par précipitation à l'heptane.

Le pétrole et les fractions pétrolières sont des mélanges très complexes où, à côté des hydrocarbures, se trouvent des composés divers, contenant principalement du soufre, de l'azote, de l'oxygène, ainsi que des métaux. Ces composés sont en quantité et en nature variables suivant la provenance du pétrole brut et les fractions considérées. Ce sont généralement des impuretés nuisibles à la bonne qualité des produits pétroliers, pour des raisons de pollution, de corrosion, d'odeur, d'instabilité. Parmi les nombreuses méthodes préconisées pour leur élimination, ce sont les traitements catalytiques en présence d'hydrogène qui sont les plus répandus.

Cette technique présente l'avantage de permettre l'obtention, au départ de pétroles bruts et des résidus à haute teneur en impuretés, de produits de bonne qualité.

Les difficultés de traitement de ces charges sont principalement liées à la présence d'asphaltènes et de métaux qui, dans des conditions insuffisamment contrôlées, conduisent à la désactivation des catalyseurs.

Les agents métalliques de contamination peuvent exister à l'état d'oxydes ou de sulfures, habituellement cependant, ils se trouvent sous la forme de composés organométalliques tels que les porphyrines et leurs dérivés. Les métaux les plus courants sont le vanadium et le nickel.

Les asphaltènes se trouvent sous la forme d'une suspension colloïdale, laquelle dans les conditions du raffinage hydrogénant peut s'agglomérer et se déposer sur la composition catalytique; ainsi l'hydrotraitement en lit fixe de ces charges ne donne pas des résultats satisfaisants, le catalyseur se désactivant à la suite de dépôts de coke et de métaux.

La technique du lit bouillonnant, appliquée aux charges lourdes (B.F. 2396065 et 2396066), permet de réduire d'environ 1,5 fois la consommation de catalyseur par rapport aux procédés antérieurs en lit fixe et d'augmenter approximativement de 2,5 fois la production de produits liquides par rapport aux procédés qui utilisent le désasphaltage préalable de la charge initiale. Ce type de procédé convertit bien les composés organométalliques solubles, mais est moins efficace vis-à-vis des asphaltènes. En outre, il se produit une certaine érosion du matériel et du catalyseur. Une difficulté est la filtration du produit pour en séparer les fines particules de matières solides en suspension.

Une autre technique palliant ces insuffisances, car elle assure une meilleure accessibilité des asphaltènes de haut poids moléculaire aux sites catalytiques, est divulguée par de nombreux brevets comme le brevet français 1373253 ou le brevet U.S. 3165463.

Dans ce but, on utilise des composés métalliques catalytiquement actifs, sous forme divisée. Ce sont des composés de métaux choisis dans les groupes IV, V, VI et/ou dans le groupe du fer, en suspension ou en solution. Au cours du traitement d'hydroraffinage, ils subissent diverses transformations et sont finalement présents sous forme finement dispersée ou boue, le plus souvent sous forme de sulfures.

Cette technique peut porter des noms variables tels que hydrogénation, hydrotraitement, hydroraffinage ou hydroviscoréduction.

La technique implique qu'on sépare les hydrocarbures lourds et la boue de catalyseur du produit total sortant de la zone de réaction. Cette opération s'est effectuée jusqu'à présent par des moyens tels que la centrifugation, la filtration, la distillation suivie de séparation de la boue contenant le catalyseur; on a également proposé de recycler cette dernière en totalité ou en partie, pour traiter une nouvelle charge d'hydrocarbures.

Cette boue contient également, en dehors du métal utilisé comme matière à activité catalytique, des quantités variables de nickel, de vanadium ou d'autres métaux provenant de la conversion destructive des asphaltènes. Avant recyclage on peut soutirer une partie de cette boue, à titre de purge de catalyseur, et la remplacer par une quantité sensiblement équivalente de composé catalytique frais.

La principale difficulté, dans les techniques décrites plus haut, tient à la séparation entre catalyseur et produit de la réaction. En effet certaines méthodes, notamment la distillation, sont coûteuses en énergie et nécessitent des températures relativement élevées que le catalyseur ne supporte pas en l'absence d'hydrogène; d'autres méthodes nécessitent un refroidissement important de l'effluent, ce qui est peu avantageux puisqu'il faut le réchauffer ensuite pour le renvoyer en partie au réacteur; d'autres enfin, telles que la filtration, aboutissent à un bouchage relativement rapide des filtres.

US—A—4 411 790 décrit une méthode d'ultrafiltration tangentielle appliquée à des huiles lubrifiantes usées ou à des résidus de distillation de pétrole, avec toutefois des résultats relativement insatisfaisants en ce qui concerne la filtration des asphaltènes et du vanadium, puisqu'une large partie d'entre eux traverse les membranes inorganiques. En outre, on observe un bouchage relativement rapide des membranes, en particulier lorsque la charge renferme plus de 8% en poids d'asphaltènes (test à l'heptane).

L'objet de l'invention est de décrire un procédé d'hydrotraitement de fractions lourdes

2

EP 0 235 003 B1

d'hydrocarbures contenant des asphaltènes, qui remédie au moins en partie aux inconvénients précités, et dans lequel on obtient une huile à teneur fortement réduite en asphaltènes, sans avoir recours à des systèmes onéreux de fractionnement des produits, même lorsque la teneur en asphaltènes de la charge est élevée, par exemple égale ou supérieure à 8% (test de l'heptane).

L'hydrotraitement est réalisé à 360—500°C et 50—300 bars en atmosphère d'hydrogène.

Le procédé utilise un catalyseur qui, du fait de la finesse de ses particules, est dispersé dans la phase liquide et doit en être séparé. Cette finesse résulte le plus souvent du fait que le catalyseur est introduit sous forme de composés solubles ou dispersables dans l'huile, qui subissent ensuite diverses transformations, notamment une sulfuration.

Selon l'invention, l'effluent d'une unité d'hydrotraitement catalytique d'hydrocarbures, constitué d'une phase mixte gaz libre-liquide renfermant du catalyseur dispersé et du gaz dissous est d'abord soumis à un fractionnement gaz/liquide permettant de séparer ladite phase gazeuse libre, riche en hydrogène, de ladite phase liquide. La fraction liquide d'hydrocarbures obtenue, qui renferme le catalyseur dispersé est soumise à un traitement par mise en circulation le long d'une membrane poreuse inorganique (filtration tangentielle), donc dans une zone amont par rapport à la membrane, à une température suffisante pour que la phase liquide présente une fluidité suffisante, par exemple à une température d'au moins 100°C. A la sortie de cette zone amont, on recueille une fraction d'hydrocarbures, enrichie en catalyseur, qu'on renvoie au moins en partie à la zone d'hydrotraitement. Du côté aval, on recueille de l'huile à teneur réduite en éléments catalytiques et en asphaltènes.

Selon un premier mode préféré de mise en oeuvre, la filtration tangentielle est mise en oeuvre sur le produit liquide d'hydrotraitement libre de phase gazeuse mais renfermant encore au moins une partie des produits légers de la réaction, à l'état dissous. On peut donc faire subir une ou plusieurs détentes au produit de la réaction, mais il est préférable de ne pas abaisser sa pression au-dessous de 10 bars absolus pour lui conserver une quantité suffisante d'éléments légers à l'état dissous, ces éléments étant plus spécialement de l'hydrogène et des hydrocarbures légers. On a en effet constaté que si l'huile était ramenée à la pression atmosphérique et pratiquement totalement dégazée avant filtration, la vitesse de filtration s'abaissait considérablement, toutes choses égales par ailleurs.

Il n'est toutefois pas nécessaire que l'huile soit filtrée dans un état de totale saturation en gaz; et l'on préfère même opérer en état de sous-saturation comme indiqué ci-après.

Selon un second mode préféré de mise en oeuvre, la fraction liquide d'hydrocarbures renfermant le catalyseur dispersé et le gaz dissous en quantité d'environ la saturation, provenant du fractionnement gaz/liquide mentionné plus haut, est soumise à un traitement destiné à amener sa teneur en gaz dissous nettement au-dessous du taux de saturation en gaz, dans les conditions prévalantes, puis mise en circulation le long de la face amont d'une membrane poreuse inorganique, les conditions de température et de pression lors de ce passage dans la zone amont étant telles que ladite fraction liquide d'hydrocarbures demeure constamment au-dessous de la saturation en gaz (c'est-à-dire qu'on n'observe pas de dégazage côté amont malgré la perte de charge qui résulte de cette circulation). A la sortie de la zone amont, on recueille une fraction d'hydrocarbures, qui n'a pas traversé la membrane, enrichie en éléments catalytiques, que l'on renvoie, au moins en partie, à l'unité d'hydrotraitement. On peut en purger une partie. Par gaz on entend non seulement l'hydrogène mais également les hydrocarbures légers, le sulfure d'hydrogène et plus généralement tous les gaz ou vapeurs présents.

Du côté aval de la membrane, où la pression est plus basse qu'en amont, on recueille une fraction d'huile (ou une fraction mixte huile/gaz, selon la valeur de la pression) de teneur fortement abaissée en éléments catalytiques et en asphaltènes.

Pour amener la fraction liquide d'hydrocarbures renfermant du gaz dissous en quantité égale à (ou proche de) la saturation jusqu'à un état où la quantité de gaz dissous est inférieure à la saturation, on peut avantageusement accroître la valeur de la pression qui s'exerce sur cette fraction, en l'absence de gaz libre (sinon du gaz supplémentaire se dissoudrait), par exemple par l'effet d'une pompe de circulation.

L'accroîssement de pression à exercer ainsi doit être au moins égal à la chute de pression (aussi appelée perte de charge) que subit inévitablement ladite fraction liquide lorsqu'elle circule dans la zone amont de la membrane au contact de celle-ci. Cette chute de pression dépend de plusieurs facteurs, en particulier section de passage, longueur du chemin amont à parcourir, viscosité du liquide. Elle est généralement entre 0,1 et 10 bars, le plus souvent de 0,2 à 3 bars. C'est donc, au minimum, de cette valeur qu'il faut remonter la pression de la fraction liquide. Il n'y a pas de limite supérieure.

Selon un mode de réalisation particulier, si l'on utilise plusieurs cellules distinctes de filtration, on peut soit remonter la pression d'au moins la somme des chutes individuelles successives de pression côté amont, soit remonter la pression entre chaque cellule d'au moins la perte de charge amont de chaque cellule.

Selon un mode de réalisation particulier, on remonte la pression de la fraction d'hydrocarbures à filtrer d'au moins la somme $\Delta P_1 + \Delta P_2$, où $\Delta P_1$ est la chute de pression due à la circulation entre l'entrée amont et la sortie amont et $\Delta P_2$ est la chute de pression entre la sortie de la face amont et la face aval de la membrane.

Sous ces réserves, la filtration peut être réalisée à une température quelconque, par exemple à 125—500°C, et à une pression quelconque (côté amont) pourvu qu'il y ait un différentiel suffisant de

3

EP 0 235 003 B1

pression pour permettre la filtration. Il peut être avantageux d'opérer dans des domaines de température et pression proches de ceux de la réaction d'hydrotraitement, c'est-à-dire 360—500°C et 50—300 bars, ce qui simplifie la mise en oeuvre du procédé.

La membrane peut être l'une quelconque de celles décrites dans l'art antérieur, et par exemple dans les brevets US—4060488, 4411790 ou FR—2 257 092 ou 2550953. En particulier, selon ces brevets, la membrane peut comporter un support poreux de métal, céramique, carbone ou équivalent, sur lequel a été déposée une matière fine constituée d'au moins un composé de métal, par exemple l'un des oxydes des éléments suivants: titane, zirconium, silicium, magnésium, aluminium, yttrium, hafnium, oxydes mixtes de plusieurs de ces métaux, avec ou sans silice, ou oxyde de bore, ou un fluorure de métal alcalin ou alcalino-terreux, un carbure de silicium, un nitrure de silicium.

Le rayon de pores de la membrane inorganique peut être choisi, entre $20.10^{-10}$m et $2000.10^{-10}$m.

Le rayon de pores optimum pour avoir à la fois un débit de filtration élevé et stable et un taux de rejet des solides élevé dépend du système catalytique utilisé. Par exemple avec les systèmes catalytiques à base de précurseurs organosolubles (naphténate de molybdène) l'optimum se situe entre 150 et $400.10^{-10}$m alors qu'avec les systèmes à base de précurseurs pulvérulents (oxydes de fer, sulfate de fer, boues rouges) l'optimum se situe plutôt entre 300 et $1000.10^{-10}$m. De préférence, on utilise le rayon de pores maximum, mais néanmoins inférieur au rayon de la particule la plus fine, de façon à n'avoir pas de colmatage.

Le catalyseur de la réaction d'hydrotraitement (ou d'hydroviscoréduction, ou d'hydrogénation, est introduit sous forme d'un composé de l'un quelconque des métaux des groupes V à VIII de la classification périodique des éléments, ou d'un mélange de ces composés. Des métaux représentatifs sont le vanadium, le tungstène, le molybdène, le cobalt, le nickel et/ou le fer. On peut introduire ces composés tels quels ou sous forme de solution ou de suspension dans un liquide quelconque qui ne gêne pas la réaction. L'art antérieur renferme de nombreuses propositions à cet égard.

La quantité de catalyseur frais dépend de l'activité de ce dernier, de 20 ppm (poids) à 5% (poids) ou plus par rapport à la charge fraîche d'hydrocarbures.

En raison du recyclage de catalyseur, à partir de la sortie amont de la zone de filtration, vers la zone de réaction, la concentration en catalyseur, dans la zone de réaction peut se situer entre 500 ppm et 20% en poids, par rapport aux hydrocarbures.

La vitesse de circulation dans le compartiment amont de la membrane est de préférence adaptée à la concentration en solides de la suspension traitée, avantageusement dans la gamme 0,5—11m/s.

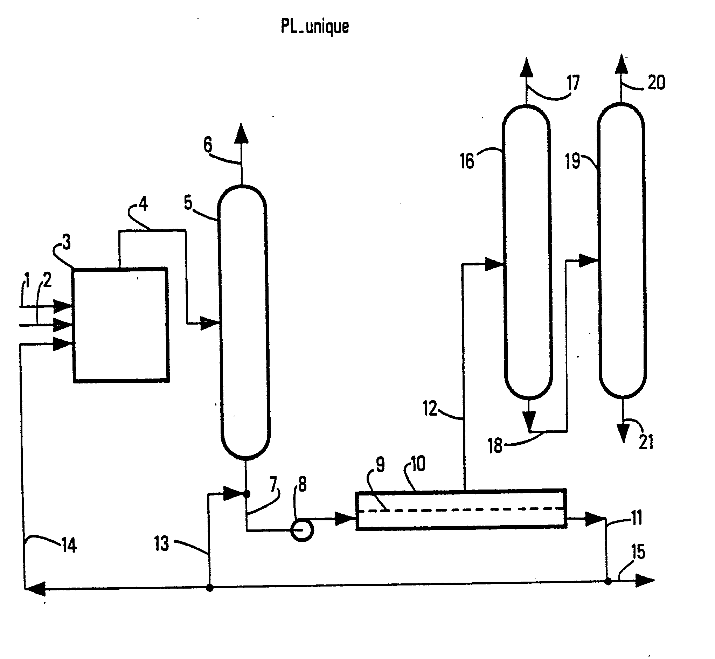

La figure jointe illustre un mode de réalisation de l'invention (les données chiffrées figurent à titre d'exemple).

La charge d'hydrocarbures (1), additionnée de catalyseur finement dispersé, et l'hydrogène (2) pénètrent dans le réacteur (3). La température est de 480°C et la pression de 150 bars. L'effluent passe par la conduite (4) dans le séparateur (5): l'hydrogène gazeux (6) se sépare de la phase liquide, renfermant le catalyseur (7). Cette phase liquide est saturée en hydrogène.

La pompe (8) remonte la pression de 5 bars absolus (Pression totale = 155 bars). La phase liquide et le catalyseur dispersé longent la membrane inorganique de filtration (9) de l'unité de filtration (10) du côté amont. Ils ressortent par la conduite (11), à une pression plus basse d'un bar que la pression qu'ils avaient à l'entrée (la perte de charge a donc été de 1 bar). Ils sont renvoyés par les conduites (11) et (14) au réacteur (3), après passage dans un réchauffeur non-représenté. Une partie en est renvoyée vers la pompe 8. Une autre partie est purgée par la ligne (15). Le filtrat (côté aval) peut être soutiré par la ligne (12). Le filtrat peut être traité en vue du fractionnement des produits. On le soumet à une détente, par exemple jusqu'à 5 bars, et on l'envoie dans un séparateur (16). En tête, on sépare du gaz (17) et, en fond, une phase liquide (18) qui est fractionnée dans la colonne (19). En tête (20) on recueille un distillat (distillat léger + moyen) et en fond (21) le produit hydrocarboné du procédé.

L'unité (10) peut comprendre plusieurs unités individuelles associées en série et/ou parallèle.

Selon une variante, on peut ne disposer l'unité (10) qu'après passage dans 2 (ou plus) séparateurs tels que (5), fonctionnant chacun sous des pressions de plus en plus basses en évitant toutefois de descendre au-dessous de 10 bars absolus. Cela permet de retirer du circuit, non seulement l'hydrogène gazeux, mais aussi d'autres gaz initialement dissous tels que $H_2S$, $CH_4$, $C_2H_6$, etc. Cependant, il sera préférable de relever la pression à la sortie du séparateur précédant l'unité de filtration par membrane inorganique.

Bien que l'opération de filtration puisse être poursuivie longtemps, il est avantageux de nettoyer la membrane périodiquement en appliquant une contre-pression côté aval, par exemple de 1 à 30 bars. Les membranes telles que celles du brevet US—4 411 790 ou du brevet FR—2550953 permettent d'appliquer une telle contre-pression et sont donc préférées.

Exemple 1

On opère avec une batterie de cellules de filtration. La couche filtrante est du type oxyde de zirconium d'un rayon de pores de $150.10^{-10}$ mètre. Le support est en nickel fritté.

La charge est un résidu sous vide Arabe lourd auquel on a ajouté 70 ppm en poids de molybdène et 20 ppm en poids de cobalt sous forme de naphténates, ainsi qu'un courant de recyclage (concentrat défini ci-après) renfermant des métaux principalement sous forme de sulfures, sous forme de dispersion.

Le mélange ci-dessus, additionné d'hydrogène en excès par rapport à la saturation, est maintenu à 430°C sous 150 bars avec un temps de séjour de 3 heures. La concentration en insolubles s'établit à 15 g/l,

4

comprenant 6% de métaux.

L'effluent, ayant la composition ci-dessus passe dans 2 séparateurs successifs, le premier à 150 bars et 380°C, le second 20 bars et 250°C, et les gaz libérés sont évacués. La phase liquide résiduelle à 20 bars et 250°C est reprise par une pompe de circulation qui remonte sa pression à 28 bars, puis circule à 4 mètres/s du côté amont de membranes à l'oxyde de zirconium à 250°C, 28 bars à l'entrée amont, 26 bars à la sortie amont. La pression en aval de la membrane est de 22 bars.

Le concentrat (fraction n'ayant pas traversé la membrane) est recyclé; on en purge toutefois une fraction pour maintenir une concentration constante du catalyseur dans le réacteur. On n'a pas observé de dégazage.

Le filtrat, débarassé de 97,3% des insolubles, présente la composition du tableau I où l'on a aussi donné la composition du mélange charge fraîche + catalyseur frais.

### TABLEAU I

|  | charge fraîche + catalyseur frais de l'ex.1 | Filtrat de l'ex.1 |
|---|---|---|
| Asphaltènes (C7)% | 13 | 1,8 |
| Ni ppm | 46 | 10 |
| V ppm | 264 | 26 |
| Mo ppm | 70 | 0,5 |
| Co ppm | 20 | 0,5 |

Les résultats de la filtration sont donnés dans le tableau II.

La chromatographie montre un certain enrichissement du filtrat en hydrocarbures légers (essence et distillats moyens) par rapport à la charge de filtration, ce qui est particulièrement avantageux puisque ce sont les fractions les plus lourdes qui sont recyclées au réacteur, avec le catalyseur. On peut ainsi recycler sélectivement une partie des fractions lourdes, celles qui nécessitent la conversion la plus importante.

### Exemple 2

L'exemple 1 est répété, excepté que le séparateur était réglé à 28 bars et qu'on n'a pas relevé la pression de la phase liquide issue du séparateur. On opérait donc avec la phase liquide saturée en gaz dissous.

Comme dans l'exemple 1, la pression, côté amont, était de 28 bars à l'entrée et 26 bars à la sortie, et côté aval de 22 bars. Les résultats de filtration figurent dans le tableau II. La composition du produit était sensiblement la même que dans l'exemple 1.

On constate, par rapport à l'exemple 1, que le débit est à la fois plus faible et moins stable dans le temps. On observe également un dégazage important sur les deux effluents (amont et aval) de la membrane.

### TABLEAU II

| | Débit de filtrat $m^3$/jour. $m^2$ | | Taux de rejet (*) après 50 h |
|---|---|---|---|
| EXEMPLE | après 1h | après 50h | R |
| 1 | 5 | 5 | 97,3% |
| 2 | 1,9 | 1,5 | 96,8% |

(*) $R = 1 - \dfrac{C_p}{C_o}$ où $C_p$ = concentration en insolubles dans le perméat;
$C_o$ = concentration en insolubles dans la charge.

### Exemple 3

On a répété l'exemple 1 avec une membrane de même nature mais présentant un rayon moyen des pores de $300.10^{-10}$m. Le débit de filtrat a été de 9m³/jour.m² après 5 h et 8,8m³/jour.m² après 50 h. Le taux de rejet après 50 h était de 96%. Il n'y a pas eu de dégazage.

### Exemple 4

La membrane est une alumine de rayon de pores de $500.10^{-10}$m.

La charge est un résidu Safaniya, auquel on ajoute 0,5% en poids de boues rouges, ainsi qu'un courant de recyclage, de manière à maintenir une concentration constante de 3% en poids de solides dans le réacteur. On opère à 480°C et 220 bars avec de l'hydrogène en excès par rapport à la saturation. Le temps de séjour est de 4 heures.

On passe dans 2 séparateurs dont le second à 50 bars et 330°C alimente, à travers une pompe, l'unité de filtration fonctionnant sous 64 bars (entrée amont), 61 bars (sortie amont) et 52 bars (côté aval).

On n'observe pas de dégazage.

On constate un débit de filtration de 15 m³/j.m², et ce débit reste stable pendant les 50 h de l'expérience.

Le filtrat est ensuite traité de manière conventionnelle, c'est-à-dire dégazé à une pression de 5 bars et étêté à pression atmosphérique à 330°C. Il constitue un fuel lourd répondant aux normes ASTM.

### Exemple Comparatif

On répète l'exemple 4 jusqu'au passage dans les deux séparateurs, y compris. De là on passe directement dans un 3ème séparateur de gaz sous 1 bar à 330°C. La phase liquide est donc largement débarrassée des fractions légères dissoutes. On remonte la pression de 1 bar à 17 bars à 330°C et filtre à 17 bars, entrée amont, 14 bars, sortie amont, et 5 bars, sortie aval, donc avec les mêmes différences de pression qu'à l'exemple 4.

Dans ce cas le débit de filtration est seulement de 3m³/j.m².

Ceci démontre l'avantage résultant d'effectuer la filtration sur un effluent d'hydrotraitement dont la pression n'a pas été abaissée au-dessous de 10 bars.

## Revendications

1. Procédé d'hydrotraitement d'hydrocarbures lourds en phase liquide dans lequel on fait réagir une charge liquide d'hydrocarbures lourds contenant des asphaltènes et des métaux avec de l'hydrogène et un catalyseur d'hydrotraitement dispersé à 360—500°C et 50—300 bars dans une zone de réaction, on soumet l'effluent de la zone de réaction à au moins un fractionnement, on récupère séparement une phase gazeuse libre et une phase liquide saturé par du gaz dissous et renfermant le catalyseur dispersé, des asphaltènes non hydroconvertis et des métaux et on élimine la phase gazeuse libre, le procédé étant caractérisé en ce qu'on augmente la valeur de la pression s'exerçant sur cette phase liquide séparée à une valeur suffisante pour amener cette phase liquide à un état de sous-saturation en gaz, on fait circuler cette phase liquide dans l'état de sous-saturation en gaz le long de la face amont d'une membrane inorganique poreuse d'ultrafiltration à une température d'au moins 100°C dans une zone d'ultrafiltration, on récupère un filtrat liquide et une phase liquide enrichie en catalyseur, en asphaltènes non hydroconvertis et en métaux qui n'ont pas filtré à travers la membrane, on renvoie au moins une portion de la dite phase liquide à la zone de réaction et on dégaze le filtrat liquide par une chute de pression de façon à récupérer un produit hydrocarboné liquide hydrotraité et dégazé.

2. Procédé selon la revendication 1 dans lequel la membrane comprend des pores entre $20.10^{-10}$ m et $2000.10^{-10}$ m.

3. Procédé selon la revendication 1 ou 2, caractérisé en ce que là filtration est effectuée sous une pression d'au moins 10 bars absolus, côté amont de la membrane, avec la condition supplémentaire que la phase liquide ayant circulé dans la zone de filtration n'a pas subi de dégazage ou a subi un dégazage à une pression de plus 10 bars avant ladite filtration.

4. Procédé selon l'une des revendications 1 à 3 dans lequel la valeur de l'augmentation de pression s'exerçant sur la phase de liquide est au moins égale à la chute de pression subie par la phase liquide lors de son passage le long de la face mont de la membrane.

5. Procédé selon l'une des revendications 1 à 4, dans lequel ladite augmentation de pression est de 0,1 à 10 bars.

6. Procédé selon l'une des revendications 1 à 5, dans lequel on relève la pression d'au moins la somme $\triangle P_1 + \triangle P_2$ où $\triangle P_1$ est la chute de pression dûe à la circulation côté amont et $\triangle P_2$ est la chute de pression entre la sortie de la face amont et la face aval de la membrane.

7. Procédé selon l'une des revendications 1 à 6, dans lequel le catalyseur comprend au moins un composé de métal de l'un au moins des groupes V à VIII, et dans lequel la concentration en catalyseur total, frais et recyclé, est de 500 ppm à 20% en poids.

8. Procédé selon la revendication 7, dans lequel le métal (les métaux) du catalyseur est (sont) choisi(s) du groupe molybdène, cobalt et leurs mélanges.

9. Procédé selon l'une des revendications 1 à 8, dans lequel la membrane inorganique poreuse comprend au moins un oxyde de titane, zirconium, silicium, magnésium, aluminium, yttrium et/ou hafnium, ou leurs oxydes mixtes, et/ou au moins un fluorure de métal alcalin ou alcalino-terreux, et/ou un carbure ou nitrure de silicium.

10. Procédé selon l'une des revendications 1 à 9, dans lequel la charge d'hydrocarbures renferme au moins 8% en poids d'asphaltènes (test à l'heptane).

# EP 0 235 003 B1

**Patentansprüche**

1. Verfahren zur Wasserstoffbehandlung von schweren Kohlenwasserstoffen in flüssiger Phase, bei dem man eine flüssige Charge aus schwere Asphaltene und Metalle enthaltenden Kohlenwasserstoffen mit Wasserstoff und einem Hydrotreatment -Katalysator reagieren läßt, der bei der 360—500°C und 50—300 Bar in einer Reaktionszone dispergiert ist, man den Abstrom aus der Reaktionszone wenigstens einer Fraktionierung unterwirft, getrennt eine gasförmige freie Phase und eine flüssige Phase gewinnt, die mit gelöstem Gas gesättigt ist und den dispergierten Katalysator, nicht mit Wasserstoff umgewandelte Asphaltene und Metalle enthält und man die gasförmige freie Phase entfernt, dadurch gekennzeichnet, daß man den Wert des auf diese abgetrennte flüssige Phase wirkenden Drucks auf einen ausreichenden Wert erhöht, um diese flüssige Phase in einen Zustand der Gas-Untersättigung zu bringen, daß man diese flüssige Phase im Zustand der Gas-Untersättigung längs der anströmseitigen Oberfläche einer anorganischen porösen Ultrafiltrationsmembran bei einer Temperatur von wenigstens 100°C in einer Ultrafiltrationszone strömen läßt, man eine flüssiges Filtrat und eine flüssige Phase gewinnt, die an Katalysator, nicht mit Wasserstoff umgewandelten Asphaltenen und Metallen, die durch die Membran nicht filtriert wurden, angereichert ist, man wenigstens einen Teil dieser flüssigen Phase zur Reaktionszone zurückführt und das flüssige Filtrat durch einen Druckabfall derart entgast, daß ein flüssiges kohlenwasserstoffhaltiges, mit Wasserstoff behandeltes und entgastes Produkt gewonnen wird.

2. Verfahren nach Anspruch 1, dadurch gekennzeichnet, daß die Membran Poren zwischen $20 \cdot 10^{-10}$ m und $2000 \cdot 10^{-10}$ m aufweist.

2. Verfahren nach Anspruch 1 oder 2, dadurch gekennzeichnet, daß die Filtration unter einem Druck von wenigstens 10 Bar absolut auf der Anströmseite der Membran mit der Zusatzbedingung durchgeführt wird, daß die flüssige Phase, die in der Ultrafiltrationszone zirkuliert hat, keiner Entgasung unterzogen worden ist oder eine Entgasung bei einem Druck von mehr als 10 Bar vor dieser Filtrierung erfahren hat.

4. Verfahren nach einem der Ansprüche 1 bis 3, bei dem der Wert der auf die flüssige Phase wirkenden Druckerhöhung wenigstens gleich dem Druckabfall ist, den die flüssige Phase beim Passieren längs der anströmseitigen Oberfläche der Membran erfahren hat.

5. Verfahren nach einem der Ansprüche 1 bis 4, bei dem diese Druckerhöhung 0,1 bis 10 Bar beträgt.

6. Verfahren nach einem der Ansprüche 1 bis 5, bei dem man den Druck um wenigstens die Summe $\triangle P_1 + \triangle P_2$ erhöht, wo $\triangle P_1$ der Druckabfall aufgrund der anströmseitigen Zirkulation und $\triangle P_2$ der Druckabfall zwischen dem Austritt der anströmseitigen Fläche und der abströmseitigen Fläche der Membran ist.

7. Verfahren nach einem der Ansprüche 1 bis 6, wobei der Katalysator wenigstens eine Metallverbindung aus wenigstens einer der Gruppen V bis VIII umfaßt und wobei die Konzentration an Katalysator insgesamt, frischem und im Kreislauf geführtem, 500 ppm bei 20 Gew.-% beträgt.

8. Verfahren nach Anspruch 7, bei dem das Metall (die Metalle) des Katalysators gewählt ist (sind) aus der Molybdän, Kobalt und deren Gemische enthaltenden Gruppe.

9. Verfahren nach einem der Ansprüche 1 bis 8, bei dem die poröse anorganische Membran wenigstens ein Oxid des Titans, Zirkoniums, Siliciums, Magnesiums, Aluminiums, Yttriums und/oder Hafniums oder deren Mischoxide und/oder wenigstens ein Alkalimetall- oder Erdalkalimetallfluorid und/oder ein Carbid oder Nitrid des Siliciums umfaßt.

10. Verfahren nach einem der Ansprüche 1 bis 9, bei dem die Kohlenwasserstoffcharge wenigstens 8 Gew.-% Asphaltene (Heptantest) umfaßt.

**Claims**

1. A process for hydrotreating heavy hydrocarbons in the liquid phase, wherein a liquid charge of heavy hydrocarbons containing asphaltenes and metals is reacted with hydrogen and a hydrotreatment catalyst dispersed at 360—500°C and 50—300 bars in a reacton zone, the effluent from the reaction zone is subjected to at least one fractionation, a free gaseous phase and a liquid phase saturated by dissolved gas and comprising the dispersed catalyst, non hydroconverted asphaltenes and metals are separately collected, and the free gaseous phase is removed, characterized in that the pressure exerted on this separate liquid phase is sufficiently increased to bring this liquid phase to a gas-undersaturation state, this liquid phase in the gas-undersaturated state is circulated along the upstream side of an ultra-filtration porous inorganic membrane at a temperature of at least 100°C in an ultra-filtration zone, a liquid filtrate and a liquid phase enriched in catalyst, in non hydroconverted asphaltenes and in metals which did not pass through the membrane are collected, at least part of said liquid phase is fed back to the reaction zone and the liquid filtrate is de-gassed by a pressure drop in order to collect a hydrotreated and de-gassed liquid hydrocarbon product.

2. A process according to claim 1 wherein the membrane comprises pores ranging from $20.10^{-10}$ m to $2,000.10^{-10}$ m.

3. A process according to claim 1 or 2 characterized in that the filtration is carried out under a pressure of at least 10 bars absolute, on the upstream side of the membrane, with the additional condition that the liquid phase which has circulated in the filtration zone has not been de-gassed or has not been subjected to a de-gassing process at a pressure higher than 10 bars before said filtration.

7

4. A process according to one of claims 1 to 3 wherein the increase in the pressure exerted on the liquid phase is at least equal to the drop in pressure which the liquid phase has undergone while circulating along the upstream side of the membrane.

5. A process according to one of claims 1 to 4 wherein said pressure increase ranges from 0.1 to 10 bars.

6. A process according to one of claims 1 to 5 wherein the pressure is raised by at least the sum $\triangle P_1 + \triangle P_2$ where $\triangle P_1$ is the pressure drop due to the flow on the upstream side and $\triangle P_2$ is the pressure drop between the outlet of the upstream side and the downstream side of the membrane.

7. A process according to one of claims 1 to 6 wherein the catalyst comprises at least one metal compound from at least one of groups V to VIII, and wherein the total fresh and recycled catalyst concentration ranges from 500 ppm to 20% by weight.

8. A process according to claim 7 wherein the catalyst metal(s) is (are) selected from the group consisting of molybdenum, cobalt and their mixtures.

9. A process according to one of claims 1 to 8 wherein the porous inorganic membrane comprises at least one titanium, zirconium, silicon, magnesium, aluminium, yttrium and/or hafnium oxide, or their mixed oxides, and/or at least one fluoride of an alkali or alkaline-earth metal, and/or one silicon carbide or nitride.

10. A process according to one of claims 1 to 9 wherein the hydrocarbon charge comprises at least 8% by weight of asphaltenes (heptane test).

PL.unique